# EUROPÄISCHE PATENTSCHRIFT

(11) **EP 0 477 836 B1**
(45) Veröffentlichungstag und Bekanntmachung des Hinweises auf die Patenterteilung: **24.05.1995**
(21) Anmeldenummer: 91116194.1
(22) Anmeldetag: 24.09.1991
(51) Int. Cl.: B66C 1/02, B66F 9/18

(54) **Vakuumheber**
Vacuum hoisting device
Dispositif de levage par vide

(30) Priorität: 26.09.1990 DE 9013529 U
(43) Veröffentlichungstag der Anmeldung: 01.04.1992
(73) Patentinhaber: Bartholomy & Co., D-52355 Düren (DE)
(72) Erfinder: Schmidt, Adolf, W-5160 Düren (DE); Rechener, Karl-Heinz, Dipl.-Ing., W-5014 Kerpen-Sindorf (DE)
(74) Vertreter: Paul, Dieter-Alfred, Dipl.-Ing.

(56) Entgegenhaltungen:
- DE-A- 2 847 473
- DE-B- 1 152 858
- FR-A- 1 474 798
- FR-A- 2 266 648
- FR-A- 2 316 177
- US-A- 3 351 370

## Beschreibung

Die Erfindung betrifft einen Vakuumheber zum Transport von eine Haftfläche aufweisenden Lasten gemäß den Merkmalen a) bis h) der Ansprüche 1 und 3.

Mit solchen Vakuumhebern lassen sich u.a. Rollen aus gewickelten Bändern, deren Material beispielsweise Papier, Metall, Kunststoff oder ein Laminat ist, anheben und befördern, und zwar je nach Formgebung des Saugkopfes durch stirnseitiges oder umfangsseitiges An- bzw. Aufsetzen an bzw. auf die liegende oder stehende Rolle. Auch flache Körper, wie beispielsweise Scheiben, lassen sich mit solchen Vakuumhebern umsetzen. Der Vakuumheber ist am Hubwerk eines Krans heb- und senkbar aufgehängt. Dabei kommt auch eine Mehrfachanordnung in Frage. Es können jedoch auch andere Hubwerke vorgesehen sein, wie z.B. Balanciergeräte, Manipulatoren, Rollenwender oder dergleichen.

Ein gattungsgemäßer Vakuumheber ist beispielsweise in dem DE-GM 84 35 161.6 beschrieben. Er hat als Vakuumkopf eine ebene Saugplatte, an deren Unterseite konzentrisch mehrere Ringdichtungen im Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung durch die Last gegeben ist. Dabei müssen die Ringdichtungen nicht kreisförmig sein, sondern können jede andere Form, z.B. ovale oder eckige Form haben, solange sie nur einen geschlossenen Ring bilden. Es ist auch nicht erforderlich, daß sie ineinandergelegt sind. Sie können auch nebeneinanderliegende Vakuumräume umschließen oder auf mehrere Saugplatten verteilt sein.

Die Vakuumräume sind über öffnungen in der Saugplatte mit einem Vakuumerzeuger, beispielsweise einer Vakuumpumpe, verbunden. Zwischen Vakuumerzeuger und Vakuumraum bzw. Vakuumräumen ist eine Ventilanordnung, beispielsweise ein Drei-Wege-Ventil, vorgesehen. Solange am Vakuumheber keine Last hängt, ist die Ventilanordnung derart eingestellt, daß die Verbindung zum Vakuumerzeuger unterbrochen und der Vakuumraum bzw. die Vakuumräume belüftet sind. Zusätzlich besteht die Möglichkeit, zum Abheben des Vakuumhebers von einer abgesetzten Last Preßluft in den Vakuumraum bzw. die Vahuumräume einzuleiten, um das Abheben zu erleichtern. Für das Anheben einer Last wird die Ventilanordnung nach Aufsetzen des Vakuumhebers auf die Last in die Saugstellung gebracht und hierdurch die Verbindung zwischen Vakuumerzeuger und Vakuumraum bzw. Vakuumräumen hergestellt. Auf diese Weise entsteht eine für das Anheben und Umsetzen der Last ausreichende Haftkraft.

Das Belüften des Vakuumraums bzw. der Vakuumräume sollte unmittelbar nach dem Absetzen der Last erfolgen, damit keine Zeit für weitere Umsetzvorgänge verlorengeht. Der Kranführer kann jedoch wegen des räumlichen Abstandes nicht immer genau beobachten, ob die Last schon abgesetzt ist und demgemäß die Ventilanordnung in Belüftungsstellung gebracht werden kann oder nicht.

Der Erfindung liegt die Aufgabe zugrunde, einen Vakuumheber der eingangs genannten Art so zu gestalten, daß die Belüftung bzw. gegebenenfalls die Preßluftzufuhr unmittelbar nach dem Absetzen der Last erfolgt.

Diese Aufgabe wird erfindungsgemäß durch die nachstehenden Merkmale gelöst:
i) das Kranhubwerk ist über ein Anschlußstück mit dem Saugkopf verbunden;
j) das Anschlußstück ist zwischen zwei Endstellungen vertikal beweglich geführt;
k) es ist wenigstens ein Endschalter oder ein Sensor zur Erfassung der unteren Endstellung des Anschlußstückes vorgesehen;
l) es ist eine Steuereinrichtung vorhanden;
m) der Endschalter oder der Sensor wirken mit der Steuereinrichtung derart zusammen, daß die Ventilanordnung nach Absenken des Anschlußstückes in die untere Endstellung in Belüftungsstellung geschaltet wird, wenn sie zuvor in Saugstellung war;
n) die Steuereinrichtung wirkt mit dem Antrieb des Kranhubwerks derart zusammen, daß der Antrieb in der unteren Endstellung des Anschlußstückes abgeschaltet wird.

Nach der Erfindung löst das Hubwerk die Belüftung des Vakuumraums bzw. der Vakuumräume unmittelbar im Anschluß an das Absetzen der Last automatisch aus, indem das am Hubwerk hängende Anschlußstück in der Vertikalführung in die untere Endstellung kommt und diese Stellung von dem Sensor bzw. dem Endschalter erfaßt wird. Der Kranführer braucht somit nicht mehr einzugreifen, sondern kann sich auf die automatische und ohne Zeitverzug arbeitende Umschaltung verlassen. Hierdurch wird auch die Sicherheit erhöht.

Dadurch, daß der Antrieb nach Absenken des Anschlußstückes automatisch abgeschaltet wird, erhält man gleichzeitig eine Schlaffseilsicherung. Dabei kann hierfür ein zusätzlicher Endschalter oder Sensor vorgesehen sein.

Alternativ zu dem vorbeschriebenen Vorschlag kann die Aufgabe auch durch folgende Merkmale gelöst werden:
i) das Kranhubwerk ist über ein Anschlußstück mit dem Saugkopf verbunden;
j) das Anschlußstück ist zwischen zwei Endstellungen vertikal beweglich geführt;
k) das Hubwerk weist einen Kraftsensor auf;
l) es ist eine Steuereinrichtung vorhanden;
m) der Kraftsensor wirkt mit der Steuereinrichtung derart zusammen, daß die Ventilanordnung in Belüftungsstellung geschaltet wird, wenn die auf das Kranhubwerk wirkende Last einen bestimmten Grenzwert unterschreitet und wenn die Ventilanordnung zuvor in Saugstellung war;
n) die Steuereinrichtung wirkt mit dem Antrieb des Kranhubwerks derart zusammen, daß der Antrieb abgeschaltet wird, wenn die auf das Hubwerk wirkende Last einen bestimmten Grenzwert unterschreitet.

Als Kraftsensoren kommen dabei insbesondere Dehnungsmeßstreifen oder piezoelektrische Kraftaufnehmer in Frage. Mit dieser Ausbildung wird eine noch schnellere Umschaltung der Ventilanordnung bewirkt.

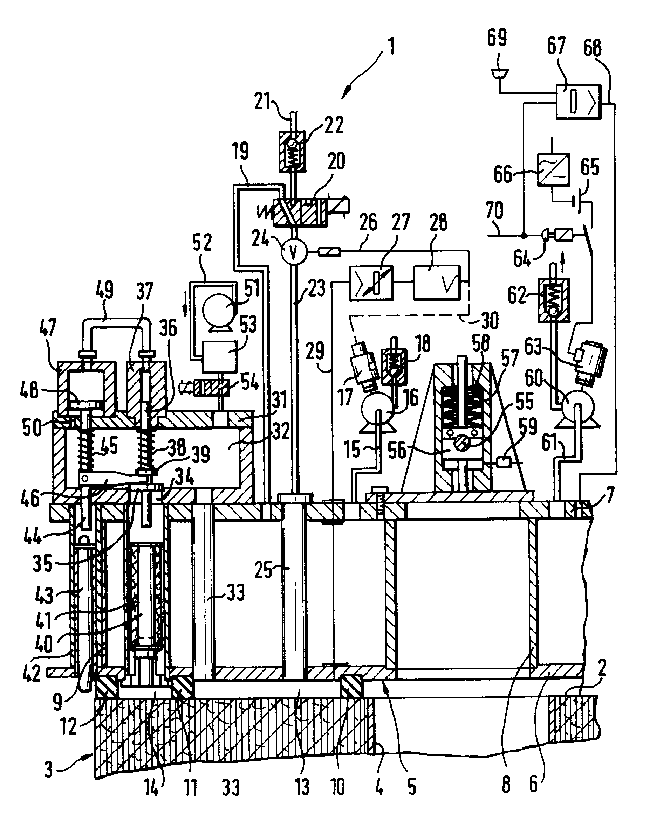

In der Zeichnung ist die Erfindung an Hand eines schematisch im Vertikalschnitt dargestellten Ausführungsbeispiels veranschaulicht. Sie zeigt den linken und mittleren Teil - der rechte Teil ist weggelassen - eines Vakuumhebers (1), der auf der Oberseite (2) einer senkrecht stehenden Papierrolle (3) sitzt, welche innenseitig eine Wickelhülse (4) aufweist. Auf diese Wickelhülse (4) ist die Papierbahn aufgewickelt.

Hauptteil des Vakuumhebers (1) ist ein Vakuumkessel (5), der von oben gesehen kreisrund ausgebildet ist. Er ist als vakuumdichte Schweißkonstruktion ausgeführt und hat als unteren Abschluß einen Saugplatte (6) und obenseitig eine Oberplatte (7). Im mittleren Bereich ist ein Mittelrohr (8) eingesetzt, das den inneren Abschluß des Vakuumkessels (5) bildet. Außenseitig wird der Vakuumkessel (5) von einer umlaufenden Seitenwandung (9) abgeschlossen.

An der Unterseite der Saugplatte (6) sind konzentrisch zur mittleren Vertikalachse des Vakuumhebers (1) drei kreisrunde Ringdichtungen (10, 11, 12) aus einem elastomeren Material angebracht. Mit diesen Ringdichtungen (10, 11, 12) sitzt der Vakuumheber (1) auf der Oberseite (2) der Papierrolle (3) auf. Die innenliegende Ringdichtung (10) hat einen solch großen Durchmesser, daß sie außerhalb der Wickelhülse (4) liegt, so daß über die Wickelhülse (4) keine Falschluft angesaugt werden kann.

Mit der weiter außenliegenden, mittleren Ringdichtung (11) bildet die innenliegende Ringdichtung (10̸) einen ringförmigen, innenliegenden Vakuumraum (13). Die außenliegende Ringdichtung (12) bildet mit der mittleren Ringdichtung (11) einen weiteren, ringförmigen und außenliegenden Vakuumraum (14), der von dem innenliegenden Vakuumraum (13) durch die mittlere Ringdichtung (11) getrennt ist. Sofern der Vakuumheber (1) einen größeren Durchmesser hat, können nach außen hin weitere Vakuumräume in entsprechender Weise vorgesehen werden.

Der Vakuumkessel (5) steht über eine Vakuumleitung (15) mit einem Vakuumerzeuger (16) in Verbindung. Der Vakuumerzeuger (16) ist mit einer Drehzahlregeleinrichtung (17) verbunden und hat zudem ein Rückschlagventil (18). Der Vakuumerzeuger (16) hält den als Reservoir dienenden Vakuumkessel (5) ständig auf einem bestimmten Unterdruck.

Von dem Vakuumkessel (5) geht ein Vakuumrohr (19) aus, das zu einem Drei-Wege-Ventil (20̸) führt, das elektromagnetisch betätigbar ist. An das Drei-Wege-Ventil (20) ist ein Ausgang (21) - versehen mit einem Rückschlagventil (22) - angeschlossen, mit dem sich eine Verbindung zur freien Atmosphäre herstellen läßt. Ferner ist eine Rohrleitung (23) angeschlossen, in der ein Regelventil (24) angeordnet ist und die in ein Durchgangsrohr (25) mündet. Das Durchgangsrohr (25) durchsetzt den Vakuumkessel (5) und ist zum innenliegenden Vakuumraum (13) hin offen.

Das Regelventil ist mit einer Regelleitung (26) mit einem Meßwertumformer (28) verbunden, der mit einem Meßwertaufnehmer (27) zusammenarbeitet, welcher wiederum über eine den Vakuumkessel (5) durchsetzende Meßleitung (29) Verbindung zum innenliegenden Vakuumraum (13) hat. Eine weitere Steuerleitung (30̸) - gestrichelt dargestellt - ist mit der Drehzahlregeleinrichtung (17) verbunden.

In der gezeigten Stellung des Drei-Wege-Ventils (20̸) hat der Vakuumkessel (5) über das Vakuumrohr (19), das Drei-Wege-Ventil (20̸), die Rohrleitung (23), das Regelventil (24) und das Durchgangsrohr (25) Verbindung zu dem innenliegenden Vakuumraum (13). Er steht also unter vollem Vakuum, wobei das Vakuum mittels des Regelventils (24) auf einen bestimmten Wert eingestellt ist, der über die Meßleitung (29), den Meßwertaufnehmer (27) und den Meßwertumformer (28) erfaßt und an das Regelventil (24) als Regelgröße weitergegeben wird. Eine weitere Beeinflussung des Vakuums geschieht über die Drehzahlregeleinrichtung (17).

Soll das Vakuum im innenliegenden Vakuumraum (13) aufgehoben werden, wird das Drei-Wege-Ventil (20̸) umgeschaltet. Auf diese Weise erhält die Rohrleitung (23), das Durchgangsrohr (25) und damit der innenliegende Vakuumraum (13) über das Rückschlagventil (22) Verbindung zur Atmosphäre, d. h. der innenliegende Vakuumraum (13) wird belüftet. Gleichzeitig wird die vorher bestehende Verbindung zwischen Vakuumleitung (15) und Rohrleitung (23) unterbrochen, d. h. das Vakuum im Vakuumkessel (5) bleibt erhalten.

Im äußeren Bereich ist auf die Oberplatte (7) des Vakuumkessels (5) ein hohler Vakuumblock (31) aufgesetzt. Dessen Innenraum (32) hat über ein den Vakuumkessel (5) durchsetzendes Durchgangsrohr (33) Verbindung zum innenliegenden Vakuumraum (13), d. h. der Innenraum (32) hat immer denselben Druck, wie er im innenliegenden Vakuumraum (13) herrscht.

Der Vakuumblock (31) hat untenseitig eine Ventilöffnung (34), die mit einem Ventilteller (35) zusammenwirkt. Der Ventilteller (35) sitzt auf einer Ventilstange (36), die hohl ausgebildet und an ihrer Unter- und Oberseite offen ist. Die Ventilstange (36) sitzt mit ihrem oberen Ende in einer Ventilstangenführung (37). Eine weitere - hier nicht näher dargestellte - Ventilstangenführung ist im Bereich des unteren Endes der Ventilstange (36) vorgesehen. Die Ventilstange (36) ist im Bereich des Innenraumes (32) von einer druckausübenden Schraubenfeder (38) umgeben, die sich obenseitig an der Ventilstangenführung (37) und untenseitig an einem Bund (39) oberhalb des Ventiltellers (35) abstützt. Der Ventilteller (35) ist somit in Richtung auf die Ventilöffnung (34) druckfederbeaufschlagt.

Die Ventilöffnung (34) setzt sich nach unten hin in einem den Vakuumkessel (5) durchsetzenden Filterrohr (40̸) fort, das in den außenliegenden Vakuumraum (14) mündet. In dem Filterrohr (40̸) ist ein Filtereinsatz (41) angeordnet, durch den von dem außenliegenden Vakuumraum (14) kommende Saugluft strömen kann, wenn der Ventilteller (35) von der Ventilöffnung (34) abgehoben ist.

Außen an der Seitenwandung (9) des Vakuumkessels (5) ist ein Führungsrohr (42) angeordnet, in dem - relativ lose gehalten - ein Taststift (43) vertikal beweglich gelagert ist. Er liegt unmittelbar neben der Außenseite der außenliegenden Ringdichtung (12).

Oberhalb und in axialer Verlängerung des Taststiftes (43) ist eine Betätigungsstange (44) vakuumdicht in der unteren und der oberen Wandung des Vakuumblocks (31) gelagert. Er ist im Bereich des Innenraumes (32) des Vakuumblocks (31) von einer druckausübenden Schraubenfeder (45) umgeben, die die gleiche Federkraft entwickelt wie die Schraubenfeder (38) der Ventilstange (36). Die Schraubenfeder (45) stützt sich an der Oberwandung des Vakuumblocks (31) und untenseitig an einem starr an der Betätigungsstange (44) befestigten Gabelhebel (46) ab. Der Gabelhebel (46) erstreckt sich horizontal bis zur Ventilstange (36) und faßt dort zwischen dem Bund (39) und dem Ventilteller (35) formschlüssig ein. Auf diese Weise macht der Ventilteller (35) die Bewegungen der Betätigungsstange (44) mit.

Die Betätigungsstange (44) ragt nach oben aus dem Vakuumblock (31) in einen Ausgleichszylinder (47) hinein und weist dort endseitig einen in dem Ausgleichszylinder (47) abdichtend laufenden Ausgleichskolben (48) auf, dessen Kolbenfläche derjenigen des Ventiltellers (35) entspricht. Der oberhalb des Ausgleichskolbens (48) befindliche Raum steht über eine Ausgleichsleitung (49) mit der Ventilstangenführung (37) in Verbindung. Der Raum unterhalb des Ausgleichskolbens (48) hat über eine Ausgleichsbohrung (50) Verbindung zu dem Innenraum (32) des Vakuumblocks (31).

Bei größeren Vakuumhebern mit zusätzlichen, außenliegenden Vakuumräumen ist für jeden Vakuumraum eine vorbeschriebene Anordnung vorgesehen, wobei die jeweiligen Vakuumblöcke Verbindung zum jeweils nächsten innenliegenden Vakuumraum haben.

In der gezeigten Darstellung befindet sich der Taststift (43) in seiner untersten Stellung, weil der Durchmesser der Papierrolle (3) gerade eben mit dem Außendurchmesser der außenliegenden Ringdichtung (12) übereinstimmt. Beim Aufsetzen des Vakuumhebers (1) auf die Papierrolle (3) wird somit der Ventilteller (35) nicht hochgehoben. Dabei gleichen sich die auf den Ventilteller (35) in Öffnungsrichtung auf Grund des Vakuums im Innenraum (32) und die über die Ausgleichsbohrung (50̸) auf die Unterseite des Ausgleichskolbens (48) wirkenden Vakuumkräfte wegen des im wesentlichen übereinstimmenden Durchmessers von Ventilteller (35) und Ausgleichskolben (48) aus, d. h. die Betätigungsstange (44) und damit der Gabelhebel (46) wird mit einer Kraft nach unten gedrückt, die der Kraft entspricht, die auf den Ventilteller (35) in Öffnungsrichtung wirkt. Auf Grund dieses Ausgleichs wird der Ventilteller (35) lediglich durch die Schraubenfedern (38, 45) auf die Ventilöffnung (34) gedrückt.

Im Normalfall stimmt der Durchmesser der Papierrolle (3) nicht - wie dargestellt - exakt mit dem Außendurchmesser der außenliegenden Ringdichtung (12) überein. Ist der Durchmesser größer, wird der Taststift (43) beim Aufsetzen des Vakuumhebers (1) noch nicht betätigt, da er nach unten weniger vorsteht als die Ringdichtungen (10̸, 11, 12), selbst wenn sie durch das Eigengewicht des Vakuumhebers (1) etwas zusammengedrückt werden. Erst wenn das Dreiwege-Ventil (20̸) in die gezeigte Stellung gebracht und damit der Vakuumraum (13) mit dem vollen Vakuum beaufschlagt wird, werden die Ringdichtungen (10̸, 11, 12) derart stark komprimiert, daß der Taststift (43) an der Oberseite der Papierrolle zur Anlage kommt und sogar hochgedrückt wird. Dabei überbrückt er auch den Abstand zwischen seinem oberen Ende und dem unteren Ende der Betätigungsstange (44) und nimmt diese mit.

Über den Gabelhebel (46) wird dann der Ventilteller (35) von der Ventilöffnung (34) gegen die Wirkung der Schraubenfedern (38, 45) abgehoben. Auf diese Weise wird der außenliegende Vakuumraum (14) über das Filterrohr (40̸), die Ventilöffnung (34), den Vakuumblock (31) und das Durchgangsrohr (33) ebenfalls unter Vakuum gesetzt. Mit dem Abheben des Ventiltellers (35) findet an diesem auf der Ober- und Unterseite ein Druckausgleich statt, was ohne weitere Maßnahmen zur Folge hätte, daß die an der Unterseite des Ausgleichskolbens (48) wirkende Vakuumkraft bestrebt wäre, die Betätigungsstange (44) und damit auch die Ventilstange (36) wieder nach unten zu drücken. Da jedoch die Ventilstange (36) hohl ausgebildet und eine Verbindung zum Ausgleichszylinder (47) über die Ausgleichsleitung (49) besteht, wird auch der Raum oberhalb des Ausgleichskolbens (48) unter Vakuum gesetzt, so daß die zunächst bestehende Druckdifferenz aufgehoben wird.

Nach Absetzen der Papierrolle (3) wird - wie schon oben beschrieben - der innenliegende Vakuumraum (13) durch Betätigung des Drei-Wege-Ventils (20̸) belüftet. Diese Belüftung wirkt sich auch auf den Innenraum (32) des Vakuumblocks (31) und damit auf den außenliegenden Vakuumraum (14) aus, da der Ventilteller (35) noch geöffnet ist. Beim Abheben des Vakuumhebers (1) fährt der Taststift (43) wieder aus seinem Führungsrohr (42) heraus und senken sich der Ventilteller (35) und die Betätigungsstange (44) auf Grund der Wirkungen der Schraubenfedern (38) bzw. (45) wieder ab, bis der Ventilteller (35) die Ventilöffnung (34) geschlossen hat.

Die vorbeschriebene Situation setzt voraus, daß die Papierrolle (3) einen größeren als den gezeigten Durchmesser hat, so daß der Taststift (43) beim Aufsetzen angehoben wird. Im vorliegenden Ausführungsbeispiel ist dies nicht der Fall, so daß der Taststift (43) in seiner nach unten herausragenden Stellung verbleibt. Dies hat zur Folge, daß die Ventilöffnung (34) geschlossen bleibt, obwohl der außenliegende Vakuumraum (14) durch die Oberseite (2) der Papierrolle (3) geschlossen ist und unter Vakuum gesetzt werden könnte. Der innenliegende Vakuumraum (13) ist jedoch von seiner Fläche so berechnet, daß in diesen Fällen die von ihm ausgehende Saugkraft ausreicht, um die Papierrolle (3) anzuheben und hängend zu transportieren, so daß es der Vakuumbeaufschlagung des außenliegenden Vakuumraums (14) in solchen Fällen nicht bedarf. Beim Absetzen und anschließenden Anheben des Vakuumhebers (1) entsteht jedoch das Problem, daß durch das Ausfedern der Ringdichtungen (11, 12) in dem außenliegenden Vakuumraum (14) ein Vakuum entsteht, da hier - im Gegensatz zum belüfteten innenliegenden Vakuumraum (13) - keine Luft nachfließen kann. Dies kann dazu führen, daß die Papierrolle (3) beim Anheben des Vakuumhebers (1) eine gewisse Strecke mitgenommen wird, bis das sich im außenliegenden Vakuumraum gebildete Vakuum durch Luft, die durch das Material der Papierrolle (3) langsam nachfließt, so weit aufgehoben ist, daß die Papierrolle (3) nicht mehr getragen wird. Sie stürzt dann unkontrolliert ab.

Um dies zu vermeiden, ist ein Preßlufterzeuger (51) vorgesehen, der über eine Preßluftleitung (52) mit einem Preßluftreservoir (53) und über ein Magnetventil (54) mit dem Innenraum (32) des Vakuumblocks (31) verbunden ist. Normalerweise ist das Magnetventil (54) geschlossen. Nach dem Absetzen der Papierrolle (3) und Umschaltung des Drei-Wege-Ventils (20) in die Belüftungsstellung wird das Magnetventil (54) durch eine hier nicht näher dargestellte, automatische Steuerung geöffnet, wenn sich der Druck im Vakuumraum (13) auf nahezu freien Atmosphärendruck erhöht hat.
. Damit wird der Innenraum (32) des Vakuumblocks (31) und über das Durchgangsrohr (33) der innenliegende Vakuumraum (13) unter Überdruck gesetzt. Ein Abfließen der Luft über die Rohrleitung (23) und das in Belüftungsstellung befindliche Drei-Wege-Ventil (20̸) wird durch das Rückschlagventil (22) verhindert. Der sich in dem innenliegenden Vakuumraum (13) aufbauende Überdruck reicht aus, um den Vakuumheber (1) von der Papierrolle (3) abzuheben und die sich dabei in dem außenliegenden Vakuumraum (14) auf Grund der Ausfederung der Ringdichtungen (11, 12) bildende Vakuumkraft zu überwinden. Es kommt dann nicht mehr zu einer ungewollten Mitnahme der Papierrolle (3). Die Preßluftzufuhr wird sofort gestoppt, nachdem der Vakuumheber (1) abgehoben ist, was durch entsprechende Drucksensoren automatisch gesteuert wird.

Der Vakuumheber (1) ist - was hier nicht näher dargestellt ist - an einem Kranlaufwerk zentrisch aufgehängt. Dessen Unterflasche ist dabei mit einem Tragbolzen (55) verbunden, der über Kulissensteine (56) beweglich in einer Vertikalführung (57) gelagert ist. Untenseitig ist der Tragbolzen (55) verbreitert und stützt sich hierüber nach oben hin an einer Tellerfeder (58) ab. Im unteren Teil der Vertikalführung (57) ist ein Endschalter (59) angeordnet, der betätigt wird, wenn die Kulissensteine (56) ihre untere Endstellung erreichen. Der Endschalter (59) ist über eine hier nicht näher dargestellte Steuerung mit dem Drei-Wege-Ventil (20̸) gekoppelt.

Wenn die Papierrolle (3) abgesetzt wird, wird das Kranlaufwerk schlaff mit der Folge, daß sich die Kulissensteine (56) mit dem Tragbolzen (55) nach unten hin absenken. Mit Betätigen des Endschalters (59) wird das Drei-Wege-Ventil (20̸) aus der gezeigten Stellung, in der der innenliegende Vakuumraum (13) unter Vakuum steht, in die Belüftungsstellung umgeschaltet, so daß automatisch der innenliegende Vakuumraum (13) Verbindung zur Atmosphäre bekommt. Ein weiterer, hier nicht näher dargestellter Endschalter ist mit dem Kranlaufwerk als Schlaffseilsicherung verbunden und schaltet es automatisch ab. Zusätzlich kann der Endschalter (59) auch noch mit dem Magnetventil (54) des Preßlufterzeugers (51) verbunden sein, so daß gleichzeitig der innenliegende Vakuumraum (13) nicht nur belüftet, sondern auch mit Druckluft versorgt wird. Der Vakuumheber (1) kann dann von der Papierrolle (3) abgehoben werden.

Eine Steuerung sorgt dafür, daß, wenn die Kulissensteine (56) den Endschalter (59) verlassen, das Drei-Wege-Ventil (20̸) nicht umgeschaltet wird, vielmehr diese Umschaltung erst nach einem erneuten Absenken des Vakuumhebers (1) auf eine andere Papierrolle und damit ein Absinken der Kulissensteine (56) auf den Endschalter (59) erfolgt. Es kann jedoch auch eine andere Logikschaltung vorgesehen werden bzw. eine Zurückstellung des Drei-Wege-Ventils in die Vakuumstellung nur durch die Bedienungsperson möglich sein.

Der Vakuumheber (1) weist zusätzlich einen Notvakuumerzeuger (60̸) auf, der über eine Notvakuumleitung (61) mit dem Innenraum des Vakuumkessels (5) verbunden ist. Der Notvakuumerzeuger (60̸) ist ebenfalls durch ein Rückschlagventil (62) gesichert. Der Notvakuumerzeuger (60̸) wird von einem Gleichstrommotor (63) angetrieben, der über einen Druckschalter (64) mit einer Batterie (65) verbunden ist. Die Batterie (65) liegt an einem mit der Stromversorgung ständig verbundenen Batterie-Ladegerät (66) an und wird auf diese Weise fortlaufend auf bestem Ladezustand gehalten.

Der Druckschalter (64) ist mit einem Meßwertaufnehmer (67) verbunden, der über eine Meßleitung (68) Verbindung zum Innenraum des Vakuumkessels (5) hat. Der Meßwertumformer (67) ist so eingestellt, daß er dem als Magnetschalter ausgebildeten Druckschalter (64) einen Impuls zum Schließen gibt, wenn uber die Meßleitung (68) festgestellt wird, daß das Vakuum im Vakuumkessel (5) einen bestimmten Mindestwert überschreitet. Dies setzt den Gleichstrommotor (63) und damit den Notvakuumerzeuger (60̸) in Gang, so daß der Abfall des Vakuums im Vakuumkessel (5) wieder kompensiert und das normale Vakuumniveau wieder erreicht wird. Gleichzeitig wird eine Störungsmeldung über einen Signalgeber (69) abgegeben, damit die Bedienungsperson sicher weiß, daß das vom Vakuumerzeuger (16) erzeugte Vakuum für den Transport der Papierrolle (3) nicht ausreichend ist.

Von dem Druckschalter (64) geht noch eine Fernbetätigungsleitung (70̸) aus, über die eine Bedienungsperson den Druckschalter (64) auch unabhängig oder alternativ zu der vorbeschriebenen Automatik betätigen und damit den Notvakuumerzeuger (60̸) in Ganz setzen kann.

Ein Vakuumabfall kann beispielsweise durch Ausfall des Vakuumerzeugers (16) oder auch dadurch entstehen, daß sich die Vakuumgreifeigenschaften einer Papierrolle (3) als Folge ihres zeitabhängigen, viskoelastischen und hygroskopischen Verhaltens so weit verschlechtert haben, daß der Vakuumerzeuger (16) nicht mehr für die Vakuumerzeugung ausreicht. In diesem Fall wirkt der Notvakuumerzeuger (60̸) unterstützend. Zusätzlich kann vorgesehen sein, daß der Notvakuumerzeuger (60̸) auch durch eine Bedienungsperson zugeschaltet wird, wenn dies erforderlich erscheint.

Im übrigen ist unter Vakuum im Sinne dieser Beschreibung ein Druck zu verstehen, der geringer ist als der freie Atmosphärendruck.

## Patentansprüche

1. Vakuumheber (1) zum Transport von eine Haftfläche (2) aufweisenden Lasten (3) mit folgenden Merkmalen:
a) der Vakuumheber (1) hat einen Saugkopf (5, 6);
b) der Saugkopf (5, 6) ist an einem Kranhubwerk aufgehängt;
c) das Kranhubwerk hat einen Antrieb;
d) der Saugkopf (5, 6) hat wenigstens eine an seiner Saugseite vorspringende Ringdichtung (10̸, 11, 12);
e) es ist zumindest ein Vakuumraum (13, 14) von einer Ringdichtung (10̸, 11, 12) umschlossenen;
f) der Vakuumraum bzw. die Vakuumräume (13, 14) sind an einen Vakuumerzeuger (16) angeschlossen;
g) es ist eine Ventilanordnung (20̸) vorgesehen;
h) die Ventilanordnung (20̸) ist zwischen einer Saugstellung, in der der Vakuumerzeuger (16) Verbindung zu dem Vakuumraum bzw. zu den Vakuumräumen (13, 14) hat, und einer Belüftungsstellung, in der die Verbindung zum Vakuumerzeuger (16) unterbrochen und der Vakuumraum bzw. die Vakuumräume (13, 14) belüftet oder mit Preßluft beaufschlagt ist bzw. sind, um schaltbar;
gekennzeichnet durch folgende Merkmale:
i) das Kranhubwerk ist über ein Anschlußstück (55) mit dem Saugkopf (5, 6) verbunden;
j) das Anschlußstück (55) ist zwischen zwei Endstellungen vertikal beweglich geführt;
k) es ist wenigstens ein Endschalter (59) oder ein Sensor zur Erfassung der unteren Endstellung des Anschlußstückes (55) vorgesehen;
l) es ist eine Steuereinrichtung vorhanden;
m) der Endschalter (59) oder der Sensor wirken mit der Steuereinrichtung derart zusammen, daß die Ventilanordnung (20̸) nach Absenken des Anschlußstückes (55) in die untere Endstellung in Belüftungsstellung geschaltet wird, wenn sie zuvor in Saugstellung war;
n) die Steuereinrichtung wirkt mit dem Antrieb des Kranhubwerks derart zusammen, daß der Antrieb in der unteren Endstellung des Anschlußstückes abgeschaltet wird.

2. Vakuumheber nach Anspruch 1,
dadurch gekennzeichnet, daß ein zusätzlicher Endschalter bzw. Sensor für die Steuerung des Antriebs des Kranhubwerkes vorgesehen ist.

3. Vakuumheber (1) zum Transport von eine Haftfläche (2) aufweisenden Lasten (3) mit folgenden Merkmalen:
a) der Vakuumheber (1) hat einen Saugkopf (5, 6);
b) der Saugkopf (5, 6) ist an einem Kranhubwerk aufgehängt;
c) das Kranhubwerk hat einen Antrieb;
d) der Saugkopf (5, 6) hat wenigstens eine an seiner Saugseite vorspringe Ringdichtung (10̸, 11, 12);
e) es ist zumindest ein Vakuumraum (13, 14) von einer Ringdichtung (10̸, 11, 12) umschlossen;
f) der Vakuumraum bzw. die Vakuumräume (13, 14) sind an einen Vakuumerzeuger (16) angeschlossen;
g) es ist eine Ventilanordnung (20̸) vorgesehen;
h) die Ventilanordnung (20̸) ist zwischen einer Saugstellung, in der der Vakuumerzeuger (16) Verbindung zu dem Vakuumraum bzw. zu den Vakuumräumen (13, 14) hat, und einer Belüftungsstellung, in der die Verbindung zum Vakuumerzeuger (16) unterbrochen und der Vakuumraum bzw. die Vakuumräume (13, 14) belüftet oder mit Preßluft beaufschlagt ist bzw. sind, um schaltbar;
gekennzeichnet durch folgende Merkmale:
i) das Kranhubwerk ist über ein Anschlußstück (55) mit dem Saugkopf (5, 6) verbunden;
j) das Anschlußstück (55) ist zwischen zwei Endstellungen vertikal beweglich geführt;
k) das Hubwerk weist einen Kraftsensor auf;
l) es ist eine Steuereinrichtung vorhanden;
m) der Kraftsensor wirkt mit der Steuereinrichtung der art zusammen, daß die Ventilanordnung (20̸) in Belüftungsstellung geschaltet wird, wenn die auf das Kranhubwerk wirkende Last (3) einen bestimmten Grenzwert unterschreitet und wenn die Ventilanordnung (20̸) zuvor in Saugstellung war;
n) die Steuereinrichtung wirkt mit dem Antrieb des Kranhubwerks derart zusammen, daß der Antrieb abgeschaltet wird, wenn die auf das Hubwerk wirkende Last (3) einen bestimmten Grenzwert unterschreitet.

4. Vakuumheber nach Anspruch 3,
dadurch gekennzeichnet, daß ein zusätzlicher Kraftsensor für die Steuerung des Antriebs des Kranhubwerks vorgesehen ist.

## Claims

1. Vacuum hoisting device (1) for transporting loads (3) exhibiting an adhesive surface (2), having the following features:
a) the vacuum hoisting device (1) has a suction head (5, 6);
b) the suction head (5, 6) is suspended from a crane hoisting gear;
c) the crane hoisting gear has a drive;
d) the suction head (5, 6) has at least one ring seal (10, 11, 12) projecting on its suction side;
e) there is at least one vacuum chamber (13, 14) enclosed by a ring seal (10, 11, 12);
f) the vacuum chamber or vacuum chambers (13, 14) are connected to a vacuum generator (16);
g) there is a valve arrangement (20) provided;
h) the valve arrangement (20) is switchable between a suction setting, in which the vacuum generator (16) is connected to the vacuum chamber or vacuum chambers (13, 14), and a ventilation setting, in which the connection to the vacuum generator (16) is interrupted and the vacuum chamber or vacuum chambers (13, 14) is or are ventilated or pressurized with compressed air;
characterized by the following features:
i) the crane hoisting gear is connected to the suction head (5, 6) by a connecting piece (55);
j) the connecting piece (55) is guided in a vertically movable manner between two end settings;
k) there is at least one limit switch (59) or one sensor provided for detecting the lower end setting of the connecting piece (55);
l) there is a control device present;
m) the limit switch (59) or the sensor interact with the control device in such a way that the valve arrangement (20), once the connecting piece (55) has been lowered, is switched into the lower end setting in the ventilation setting if it was previously in the suction setting;
n) the control device interacts with the drive of the crane hoisting gear in such a way that, in the lower end setting of the connecting piece, the drive is switched off.

2. Vacuum hoisting device according to Claim 1, characterized in that an additional limit switch or sensor is provided for controlling the drive of the crane hoisting gear.

3. Vacuum hoisting device (1) for transporting loads (3) exhibiting an adhesive surface (2), having the following features:
a) the vacuum hoisting device (1) has a suction head (5, 6);
b) the suction head (5, 6) is suspended from a crane hoisting gear;
c) the crane hoisting gear has a drive;
d) the suction head (5, 6) had at least one ring seal (10, 11, 12) projecting on its suction side;
e) there is at least one vacuum chamber (13, 14) enclosed by a ring seal (10, 11, 12);
f) the vacuum chamber or vacuum chambers (13, 14) are connected to a vacuum generator (16);
g) there is a valve arrangement (20) provided;
h) the valve arrangement (20) is switchable between a suction setting, in which the vacuum generator (16) is connected to the vacuum chamber or vacuum chambers (13, 14), and a ventilation setting, in which the connection to the vacuum generator (16) is interrupted and the vacuum chamber or vacuum chambers (13, 14) is or are ventilated or pressurized with compressed air;
characterized by the following features:
i) the crane hoisting gear is connected to the suction head (5, 6) by a connecting piece (55);
j) the connecting piece (55) is guided in a vertically movable manner between two end settings;
k) the hoisting gear exhibits a force sensor;
l) there is a control device present;
m) the force sensor interacts with the control device in such a way that the valve arrangement (20) is switched into the ventilation setting if the load (3) acting upon the crane hoisting gear falls below a specific threshold value and if the valve arrangement (20) was previously in the suction setting;
n) the control device interacts with the drive of the crane hoisting gear in such a way that the drive is switched off if the load (3) acting upon the hoisting gear falls below a specific threshold value.

4. Vacuum hoisting device according to Claim 3, characterized in that an additional force sensor is provided for controlling the drive of the crane hoisting gear.

## Revendications

1. Appareil de levage à vide (1) pour le transport de charges (3) présentant une surface d'adhérence, avec les caractéristiques suivantes
a) l'appareil de levage à vide (1) possède une tête aspirante (5, 6);
b) la tête aspirante (5, 6) est suspendue à un dispositif de levage de grue :
c) le dispositif de levage de grue possède un entraînement;
d) la tête aspirante (5, 6) possède au moins un joint d'étanchéité annulaire (10,11, 12) dépassant sur son côté d'aspiration;
e) au moins une chambre de vide (13, 14) est enfermée par un joint d'étanchéité annulaire (10, 11, 12);
f) la ou les chambres de vide (13, 14) sont raccordées à un générateur de vide (16);
g) il est prévu un ensemble de soupape (20);
h) l'ensemble de soupape (20) peut être commuté entre une position d'aspiration, dans laquelle le générateur de vide (16) est relié à la ou les chambres de vide (13, 14), et une position de mise à l'air, dans laquelle la liaison vers le générateur de vide (16) est interrompue et la ou les chambres de vide (13, 14) sont mises à l'air ou alimentées en air sous pression:
**caractérisé** par les caractéristiques suivantes :
i) le dispositif de levage de grue est relié à la tête aspirante (5, 6) par l'intermédiaire d'une pièce de raccordement (55):
j) la pièce de raccordement (55) est guidée en déplacement vertical entre deux positions finales;
k) il est prévu au moins un commutateur de fin de course (59) ou un capteur pour détecter la position finale inférieure de la pièce de raccordement (55);
l) un dispositif de commande est présent:
m) le commutateur de fin de course (59) ou le capteur coopère avec le dispositif de commande de telle sorte que l'ensemble de soupape (20) est, a a suite de l'abaissement de la pièce de raccordement (55) dans la position finale inférieure, commuté en position de mise à l'air s'il était précédemment en position d'aspiration:
n) le dispositif de commande coopère avec l'entraînement du dispositif de levage de grue de telle sorte que l'entraînement est débranché dans la position finale inférieure de la pièce de raccordement.

2. Appareil de levage à vide selon la revendication 1, **caractérisé** en ce qu'un commutateur de fin de course ou capteur supplémentaire est prévu pour la commande de l'entraînement du dispositif de levage de grue.

3. Appareil de levage à vide (1) pour le transport de charges (3) présentant une surface d'adhérence, avec les caractéristiques suivantes:
a) l'appareil de levage à vide (1) possède une tête aspirante (5, 6);
b) la tête aspirante (5, 6) est suspendue à un dispositif de levage de grue;
c) le dispositif de levage de grue possède un entraînement;
d) la tête aspirante (5, 6) possède au moins un joint d'étanchéité annulaire (10, 11, 12) dépassant sur son côté d'aspiration;
e) au moins une chambre de vide (13, 14) est enfermée par un joint d'étanchéité annulaire (10, 11, 12);
f) la ou les chambres de vide (13, 14) sont raccordées à un générateur de vide (16);
g) il est prévu un ensemble de soupape (20);
h) l'ensemble de soupape (20) peut être commuté entre une position d'aspiration, dans laquelle le générateur de vide (16) est relié à la ou les chambres de vide (13, 14), et une position de mise a l'air, dans laquelle la liaison vers le générateur de vide (16) est interrompue et la ou les chambres de vide (13, 14) sont mises à l'air ou alimentées en air sous pression;
**caractérisé** par les caractéristiques suivantes:
i) le dispositif de levage de grue est relié à la tête aspirante (5, 6) par l'intermédiaire d'une pièce de raccordement (55);
j) la pièce de raccordement (55) est guidée en déplacement vertical entre deux positions finales;
k) le dispositif de levage présente un capteur de force;
l) un dispositif de commande est présent;
m) le capteur de force coopère avec le dispositif de commande de telle sorte que l'ensemble de soupape (20) est commuté en position de mise à l'air si la charge (3) agissant sur le dispositif de levage de grue tombe en dessous d'une valeur limite déterminée et si l'ensemble de soupape (20) était précédemment en position d'aspiration;
n) le dispositif de commande coopère avec l'entraînement du dispositif de levage de grue de telle sorte que l'entraînement est débranché lorsque la charge (3) agissant sur le dispositif de levage tombe en dessous d'une valeur limite déterminée

4. Appareil de levage à vide selon la revendication 3, **caractérisé** en ce qu'un capteur de force supplémentaire est prévu pour la commande de l'entraînement du dispositif de levage de grue.
